# EUROPÄISCHE PATENTSCHRIFT

(11) **EP 2 159 251 B1**
(45) Veröffentlichungstag und Bekanntmachung des Hinweises auf die Patenterteilung: **15.05.2013**
(21) Anmeldenummer: 08014962.8
(22) Anmeldetag: 25.08.2008
(51) Int. Cl.: C08J 3/22, C08L 23/06, C08L 23/12, C08L 25/06, C08G 81/02, C09D 123/08, C09D 153/00, C09D 123/06

(54) **Verwendung eines Blockcopolymers in Polymeren zur Haftungsverminderung oder Haftungsverhinderung von Kalk**
Use of block copolymers in polymers for prevention or reduction of adhesion of lime
Utilisation of copolymérisats en bloc dans polymérs pour prévention ou réduction d'adhésion de chaux

(43) Veröffentlichungstag der Anmeldung: 03.03.2010
(73) Patentinhaber: Geberit International AG, 8645 Jona (CH)
(72) Erfinder: Widler, Roland, 8335 Hittnau (CH); Siegmann, Konstantin, 8003 Zürich (CH); Hirayama, Martina, 8537 Nussbaumen (CH)
(74) Vertreter: Rüedi, Regula Béatrice

(56) Entgegenhaltungen:
- WO-A-2007/039435
- WO-A-2007/136552
- US-A- 4 057 598

## Beschreibung

### Hintergrund der Erfindung

Die vorliegende Erfindung betrifft die Verwendung eines Kunstoffs zur Verhinderung oder Verminderung von Ablagerungen, die Kalk enthalten oder daraus bestehen, sowie ein Verfahren zur Herstellung des Kunstoffs.

### Stand der Technik

Die Bildung von Ablagerungen jeglicher Art, seien sie anorganischer Natur, wie Kalk oder Russ, organischer Natur, wie Fettfilme, oder biologischer Natur, wie Biofilme, ist ein lange bekanntes und bereits viel untersuchtes Gebiet.

Die Verhinderung von Kalkablagerungen oder kalkhaltigen Ablagerungen ist ein grosses Problem bei allen Wasser führenden Systemen, wie Wasserzu- und -ableitungen, Waschmaschinen, Boilern etc. Bis heute wird die Verhinderung von Ablagerungen primär durch Behandlung des kalkhaltigen Wassers angegangen, z.B. durch Zumischen von Calcium bindenden Stoffen, wie Phosphaten, Zeolithen und geeigneten Polymeren, wie z.B. Polyasparaginsäure, oder durch Entfernen des Calciums mittels Ionenaustauscher oder durch Magnetbehandlung.

>

In diesen Bereichen ist es nicht möglich die belagsbildenden Stoffe in ihrer üblichen Umgebung zu beeinflussen und die Entwicklung in den letzten Jahren ging deshalb in Richtung speziell strukturierter Oberflächen (Lotus-Effekt). Im Bereich der Verhinderung von Biofilmen wurden neben biociden Substanzen, wie Silber und organischen Zinnverbindungen, auch Oberflächenmodifikationen durch Aufbringen von Adsorptionsschichten, insbesondere SAMs (Self-Assembled-Monolayers) studiert, allerdings mit sehr unterschiedlichen Erfolgen. WO 2004/078930 schlägt deshalb vor, die Oberfläche mittels Oberflächenpolymerisation zu modifizieren.

In einer früheren europäischen Anmeldung, EP 1 816 155, wurde die Herstellung von Substraten mit einer haftungsvermindernden oder haftungsverhindernden Oberfläche beschrieben, wobei die Substratoberfläche mit einer haftungsvermindernden oder haftungsverhindernden Oberflächenschicht im Silanisierungs- oder Sol-Gel-Verfahren versehen wurde. Diese Oberflächenschicht weist zumindest in einer äussersten, lösungsmittelnahen Schicht oberflächenmodifizierende Polymere auf, die sich in die Umgebung der Oberfläche erstrecken, einen Rückzugswinkel von <40° haben, und die oberflächenmodifizierenden Polymere haben einen Heteroatomanteil von ≤ 4. Leider erwies sich die Haftung einiger solcher Beschichtungen auf Kunststoffen als wenig stabil gegenüber heissem Wasser und bei gewissen pH-Werten, so dass die Silanisierungs- und Sol-Gel-Beschichtung für einen generellen Einsatz auf Kunststoffen in wässrigen Medien ungeeignet ist.

Auch andere Dokumente, welche Block-Copolymere als Additive nennen, sind bekannt. Dazu gehören WO 2007/039435, WO 2007/136552 und US 4,057,598.

Die WO 2007/039435 beschreibt ein mit Talk gefülltes Polymer. Um diesen Talk-Füllstoff zu dispergieren wird ein Dispergiermittel mit einem mit dem Talk kompatiblen Segment und einem mit dem Polymer kompatiblen Segment eingesetzt, dessen einzige Funktion das Dispergieren des Talk-Füllstoffs in der Polymermatrix ist.

WO 2007/136552 beschreibt Zumischung spezieller Additive zur Verbesserung der Verarbeitbarkeit. Die Additive umfassen ein Block-Copolymer als Tensid.

US 4,057,598 befasst sich mit der Herstellung von thermoplastischen Multiphasen Copolymeren. Die darin beschriebenen Block-Copolymere haben sehr hohes Molekulargewicht.

Weder WO 2007/039435 noch WO 2007/136552 oder US 4,057,598 betreffen die Verhinderung von Ablagerungen.

US 2003/0198825 betrifft Materialien zur Membranherstellung, welche Biofouling verhindern oder vermindern sollen.

Ziel der vorliegenden Erfindung war es, eine behandelte Oberfläche bereitzustellen, die einfach hergestellt werden kann, die gegen Kalkablagerungen eingesetzt werden kann, resp. zur Verminderung deren Haftung an den Oberflächen, und die gut mit dem Substrat verbunden ist bzw. deren Antihaftwirkung möglichst lange erhalten bleibt.

### Darstellung der Erfindung

Dieses Ziel wurde erreicht durch die Verwendung von haftungsverminderten Kunststoffen gemäss Anspruch 1.

Ein Heteroatomanteil von maximal 4 bedeutet, dass maximal 4 C-Atome (oder Si-Atome) pro Heteroatom, insbesondere O und N, gelegentlich auch S und P, vorhanden sind. Gegenionen werden für die Bestimmung des Heteroatomanteils miteinbezogen, nicht aber Wasserstoffatome, resp. Wasserstoffionen.

Ein Heteroatomanteil von ≤4 hat sich für hydrophile Ziellösungsmittel, insbesondere Wasser und wässrige Lösungen, als wesentlich herausgestellt. In wässrigem Ziellösungsmittel bevorzugt ist ein Heteroatomanteil von ≤ 2, insbesondere ≤ 1.5. Sehr gute Resultate wurden erzielt mit einem Heteroatomanteil von 0.9 bis 1.4.

Solche Oberflächen eignen sich zur Verhinderung oder zur Verminderung der Haftung von Kalk-haltigen Ablagerungen.

In der Folge wird der Gebrauch einiger Begriffe im Zusammenhang mit der vorliegenden Anmeldung näher erläutert:

Die Begriffe oberflächenmodifizierende Polymere, oberflächenmodifizierender Teil, oberflächenmodifizierender Block, funktionelle Einheit (des Oberflächenmodifizierende Block-Copolymers) und oberflächenmodifizierende Gruppe werden weitgehend synonym verwendet und beschreiben den Block des Block-Copolymers, der sich an der Oberfläche der oberflächenmodifizierten Matrix bzw. des oberflächenmodifizierten Kunststoffs befindet.

Mit Ankerteil wird der Teil des Oberflächenmodifizierenden Block-Copolymers bezeichnet, der sich vorzugsweise innerhalb der Matrix bzw. des oberflächenmodifizierten Kunststoffs befindet.

Als Matrixkunststoff wird ein mit dem erfindungsgemäss oberflächenmodifizierenden Additiv zu versetzender oder versetzter und gegebenenfalls weitere Additive enthaltender Kunststoff bezeichnet, und der Begriff Matrixpolymer richtet den Schwerpunkt auf das den Hauptbestandteil eines Kunststoffs ausmachende Polymer.

Der Begriff Polymer, wie er im Zusammenhang mit dem oberflächenmodifizierenden Teil bzw. Block gebraucht wird, umfasst auch Oligomere. Üblicherweise sind Ketten ab ca. 6 Atomen, vorzugsweise 30 bis 60 Atomen in der Hauptkette, bei verzweigten Polymeren in der längsten Kette, geeignet, wobei mindestens 2, vorzugsweise 10 bis 20 Monomereinheiten vorhanden sein sollten.

Übliche Kettenlängen für den Ankerteil weisen ca. 5 Monomereinheiten auf, häufig, insbesondere im Falle einer Polyethylen-Verankerung ca. 9 Monomereinheiten bzw. ca. 10 bis 20 Atome Minimallänge für physikalische Verankerung. Für einen Polyethylenanker wurde festgestellt, dass wesentlich längere Ankerketten (bis mindestens ca. 25 Monomereinheiten) die ausreichende Diffusion der Block-Copolymere an die Oberfläche nicht verhindern. Als gut geeignet im Falle eines Polyethylenankers haben sich Kettenlängen von 9 bis 23 Monomereinheiten erwiesen. Bei chemischer Verankerung können reaktive Ketten geringerer Länge eingesetzt werden.

Oberflächenmodifizierende Block-Copolymere werden im Rahmen der Erfindung als Zusatz bzw. als Additiv zu Polymeren, insbesondere zu thermoplastischen Polymeren, wie z.B. Polyethylen, verwendet.

Die oberflächenmodifizierenden Block-Copolymere umfassen einen Block, welcher Kalk-abweisend ist. Für einen solchen Block eignet sich beispielsweise ein Copolymer mit einem oberflächenmodifizierenden Block auf Basis von Polyethylenglycol (PEG), und einem Block, der sich im Kunststoff physikalisch verankert, d.h. mit diesem voll oder mindestens teilweise verträglich ist, für Polyethylen (PE) beispielsweise PE, für Polystyrol(PS) Styrol-Oligomere etc. Dieses Copolymer soll relativ niedrigmolekular sein (siehe oben), damit es bei der Formgebung (also im Spritzguss oder während der Extrusion) an die Oberfläche diffundiert, einerseits
weil der oberflächenmodifizierende Block bzw. Teil, z.B. die polare PEG-Einheit, mit dem Matrixpolymer, beispielsweise im Polyethylen, unverträglich ist und sich in der Schmelze zu entmischen versucht, und andrerseits
weil sich niedermolekulare Anteile an der Grenzfläche mit der grössten Scherung anreichern.

Dabei sollte sich die PEG-Einheit an der Oberfläche anordnen und so die Anti-Kalk Wirkung gewährleisten, während die PE-Einheit das Copolymer im Polyethylen verankert.

Als Ankerteil geeignet sind grundsätzlich alle Polymere und Oligomere, die mit dem Matrixpolymer bzw. dem Matrixkunststoff verträglich sind, insbesondere gleiche oder sehr ähnliche Polymere bzw. Kunststoffe. Angaben zur Verträglichkeit von Polymeren sind in der Literatur zu finden (Polymer Handbook, fourth edition, Editors: J. Brandrup, E. H. Immergut, and E. A: Grulke, Associate Editors: A. Abe, D.R. Bloch, A Wiley-Interscience Publication. John Wiley & Sons, Inc.). Tabellen, welche die Verträglichkeit aufzeigen sind z.B. zu finden in Franck, Kunststoff-Kompendium, 4. Aufl., Vogel Buchverlag, Würzburg (1996) und in Bayer AG, Anwendungstechnische Information ATI 0305 (1995).

Das Ankerteil kann in sich selbst ein Homopolymer oder ein Heteropolymer sein. Bevorzugt sind Ankerteile aus thermoplastischen Polymeren, da sich ein Block-Copolymer mit einem solchen Ankerteil gut mit einem granularen thermoplastischen Matrixkunststoff mischen und dann in eine Schmelze überführen lässt.

Beispiele solcher sowohl als Anker wie auch als Matrix geeigneter Polymere sind Polymere wie Polyethylen (PE); Polypropylen (PP) und Styrolcopolymere wie ABS. Ein geeigneter kalkabweisender oberflächenmodifizierender Teil ist beispielsweise Polyethylen-Glycol (PEG).

Als Anker in PE aber auch in PP gut bewährt hat sich ein Polyethylen mit einer Doppelbindung, wie im PE-b-PEG enthalten, das z.B. von der Fa. Aldrich unter der Bezeichnung Brij 97 erhältlich ist. Ebenfalls gut bewährt hat sich ein Polyethylen ohne Doppelbindung, wie im PE-b-PEG enthalten, das z.B. von der Fa. Aldrich unter der Bezeichnung Brij 56 erhältlich ist.

Die Verankerung ist primär physikalischer Natur, sie kann aber - falls gewünscht und in Abhängigkeit des Polymer- bzw. des Kuhlststofftyps der Matrix - zusätzlich durch chemische Reaktion verstärkt werden.

In diesem Falle sind auch Block-Copolymere mit vernetzbaren Ankermolekülen geeignet. Die chemische Verankerung kann durch Radikalreaktion, z.B. mittels organischer Peroxide und/oder energiereicher Strahlung, durch Additionsreaktion (z.B. bei Urethanen) oder Kondensation etc. bewirkt werden.

Dabei kann Vernetzung bzw. Pfropfung vor der Formgebung, z.B. in der Schmelze, erfolgen, also zu einem Zeitpunkt im Verfahren, zu dem Diffusion an die Oberfläche noch gewährleistet und der Zeitpunkt der Reaktion gesteuert werden muss, oder die Vernetzung bzw.Pfropfung erfolgt nach der Formgebung (beispielsweise radikalisch, zB durch Peroxide oder Bestrahlung) oder durch Silankondensation. Im ersten Fall, d.h. bei Vernetzung bzw. Pfropfung vor der Formgebung ist die Kontrolle über den Start der Vernetzungsreaktion sehr wichtig, damit die Diffusion der oberflächenmodifizierenden Block-Copolymere an die Oberfläche nicht beeinträchtigt oder gar unterbunden wird. Zur besseren Steuerung des Zeitpunkts des Beginns der Härtungsreaktion können neben zu aktivierenden Initiatoren auch latente Härter eingesetzt werden.

Alternativ zur Vermischung in der Schmelze kann bei gewissen Kombinationen von Matrix und oberflächenmodifizierendem Block-Copolymer auch gemeinsame kontrollierte Fällung aus der Lösung möglich sein.

Die als Additiv dienenden (Di-)Block-Copolymere werden allgemein als AAA-b-BBB bezeichnet, z.B. ein PEG-Block-Coplymer für PE als PEG-b-PE resp. ein PEG-Block-Copolymer mit irgendeinem Ankerteil als PEG-b-BBB.

Die Oberflächenmodifikationen für die erfindungsgemässe Verwendung beziehen sich nicht nur auf wässrige Lösungen sondern auf Lösungen sowie Emulsionen und Suspensionen allgemein. Daher wird in der Folge von Flüssigkeiten gesprochen. Für die flüssig vorliegenden und eine kontinuierliche Phase bildenden Stoffe wird auch bei Suspensionen und Emulsionen der Begriff Lösungsmittel verwendet.

Es wird angenommen, ohne dass die Erfindung durch diese Interpretation bisheriger Ergebnisse beschränkt werden soll, dass die guten Resultate, die bei erfindungsgemässer Verwendung der Oberflächen erhalten wurden, damit zusammenhängen, dass die oberflächenmodifizierenden Block-Copolymere eine hohe Löslichkeit und/oder Quellbarkeit im Ziellösungsmittel, insbesondere in wässrigen Lösungen, haben. Zur Herstellung der Schichten werden Block-Copolymere eingesetzt, deren oberflächenmodifizierende Blöcke als solche, d.h. im Bulk, eine Löslichkeit im Ziellösungsmittel, insbesondere in Wasser oder einer wässrigen Lösung, von mindestens 10 g/l aufweisen. Infolge der hohen Löslichkeit wird die Oberfläche durch eine Art von flüssiger Schicht gebildet, die eine feste Haftung von Ablagerungen verhindert. Das weitere Kriterium, das aufgrund der bisherigen Resultate als vorteilhaft angesehen wird, ist eine hohe Quellbarkeit im Ziellösungsmittel. Durch die Quellbarkeit verändern sich Dicke und Struktur der Oberflächenschicht bereits bei sehr geringen Lösungsmittelmengen, was einer festen Haftung, einem Festsetzen der Ablagerungen entgegenwirkt. Dabei sollte die Quellbarkeit von Polymeren, die zur Herstellung der aktiven, die Oberfläche modifizierenden Schicht verwendet werden, vorzugsweise derart sein, dass die Volumenzunahme (bestimmt im Bulk des Polymers) mindestens 20 %, vorzugsweise mindestens 30 % bezogen auf das Volumen im trockenen Zustand beträgt.

Es wird angenommen, dass die oberflächenmodifizierenden Block-Copolymere nicht zu dicht aneinander gereiht in der äussersten, lösungsmittelnahen Schicht vorliegen dürfen, damit die Quellbarkeit, wie auch die Löslichkeit, ihre Wirkung voll entfalten können.

Es wird angenommen, dass die Schicht, welche die Modifizierung der Oberfläche bewirkt, die äusserste, lösungsmittelnahe Schicht ist, deren Moleküle oder Kettenteile sich frei in das Lösungsmittel erstrecken. Es handelt sich dabei um eine Schicht von mindestens ca. 1 nm bis mindestens ca. 10 nm Dicke und üblicherweise nicht mehr als 100 nm Dicke. Diese lösungsmittelnahen Schichten sind über den Ankerteil oder das Ankermoleküle bzw. das Ankerpolymer (oft auch nur als Anker bezeichnet) in einer äusseren Schicht des erfindungsgemässe verwendeten, mit dem Additiv versetzten Matrixpolymers bzw. des Matrixkunststoffs verankert. Es wird angenommen, dass der Vorteil der eher geringen Flächenbelegung der äussersten Schicht darin besteht, dass trotz Verankerung der Moleküle eine Art dreidimensionaler Quellung resp. Löslichkeit möglich ist und dass sich die Moleküle um ihren Verankerungspunkt herum frei bewegen können.

Ebenfalls der guten Beweglichkeit zuträglich ist die spezielle Wahl des oberflächenmodifizierenden Polymers resp. der darin enthaltenen Substituenten.

Die Substituenten am oberflächenmodifizierenden Polymer, resp. die Polarität der Polymerkette selbst, richten sich nach der Polarität des Ziellösungsmittels. Für polare Ziellösungsmittel sind polare Gruppen geeignet, wie die nachfolgend beispielhaft beschriebenen Gruppen.

Für die Verwendung in polaren Ziellösungsmitteln, insbesondere wässrigen Lösungen, Suspensionen oder Emulsionen, kann das oberflächenmodifizierende Polymer polare Einheiten in der Hauptkette und/oder in modifizierenden Seitenketten enthalten.

Die oberflächenmodifizierenden Polymere haben einem Heteroatomanteil von maximal 4.

Stark bevorzugt sind Heteroatome, die keine Wasserstoffdonoren sind und die nicht deprotonierbar sind, d.h. die bevorzugten Heteroatome sind z.B. alkyliert oder - anders ausgedrückt - die oberflächenmodifizierenden Polymere enthalten möglichst wenig -COOH, -OH und -NHR Gruppen, wobei R für Wasserstoff oder irgendeinen kleinen organischen Rest steht, der die Deprotonierung resp. die Wasserstoffbrückenbildung des Amins zulassen würde. Im Allgemeinen sind maximal 40% der Heteroatome enthaltenden Gruppen deprotonierbar und/oder zur Wasserstoffbrückenbildung befähigt, vorzugsweise maximal 20 %, insbesondere 0%.

Die Beweglichkeit der oberflächenmodifizierenden Polymere wird auch unterstützt durch die Vermeidung grösserer Anteile an sp²-hybridisierten Kohlenstoff-Zentren (Doppelbindungen) (wie Aromaten, Carbonyle, Ester etc., insbesondere Aromaten) innerhalb der Polymerkette. Die Anzahl sp²-hybridisierter Kohlenstoff-Zentren in der äussersten, lösungsmittelnahen Schicht sollte maximal 50 % betragen, vorzugsweise maximal 10%, speziell bevorzugt 0%, wobei die Anzahl der sp²-hybridisierten C-Zentren bezogen auf die Gesamtheit der Atome (ohne H) gerechnet wird.

Die nachfolgend angegebenen Verbindungen sind nur Beispiele für oberflächenmodifizierende Polymere, die für wässrige Systeme geeigneten oberflächenmodifizierenden Polymere können auch zwei oder mehr verschiedene der unten angegebenen Substituenten enthalten, z.B. neben -O-R auch -C=O und/oder -COOR, oder Copolymere sein, die aus Monomeren resp. Einheiten aufgebaut sind, wie sie in den unten angegebenen Polymeren spezifiziert sind. Die oberflächenmodifizierenden Polymere können als Konstitutions- , Konfigurations-, und Konformationsisomere vorliegen, insbesondere sind auch verschiedene topologische Isomere, wie lineare Polymere, verzweigte Polymere, Sternpolymere oder Kammpolymere sowie Vernetzungen möglich.

Ein die Verankerung in der Matrixoberfläche fördernder resp. die Verankerung bewirkender Anker, resp. ein als Anker dienender Block des oberflächenmodifizierenden Block-Copolymers, wird separat behandelt.

Beispielhafte oberflächenmodifizierende Polymere sind:
- Seitenkettenmodifizierte Polymere,
- Polyoxoalkylene,
- Polyalkylenimine,
- Polyamide (substituierte und unsubstituierte),
- Polyetherester,
- Polyetherurethane,
- Polyetheramide,
- Poly-Sulfoxide,
- Poly-Sulfone, und
- Phosphorhaltige Polymere.

Spezielle Beispiele zu diesen Gruppen sind in den nachfolgenden Formeln gezeigt.

R1 bezieht sich auf carbonylartige Gruppen wie Formyl, Acetyl oder carbonylterminierte PEG-Einheiten.

R2 bezieht sich auf H, Methyl, Ethyl, Ethylen-oxy-R4, längere PEG-Einheiten, insbesondere Ketten mit 1 bis 200 PEG-Einheiten, mit Ester oder Amiden modifizierte Gruppen, aber auch modifizierte oder unmodifizierte Oligoethylenimine.

R3 ist eine Methylenoxy-Einheit, welche mit R1 oder R2 Gruppen modifiziert wurde.

R4 ist eine Gruppe ausgewählt aus entweder R1 oder R2.

R5 ist entweder -OR2 oder -N(R2)₂, und

R ist eine Gruppe ausgewählt aus R1, R2, R3 oder R4.

Alle Substituenten R, R1, R2, R3, R4 und R5 können unabhängig voneinander gleich oder verschieden sein. So kann beispielsweise innerhalb eines Substituenten R2 = Ethylen-oxy-R4 der Rest R4 unterschiedliche R2 bedeuten, z.B. wieder Ethylen-oxy-R4, wodurch eine Polyethylenglycol-Kette definiert wird, und/oder R2 = Wasserstoff, Methyl oder Ethyl, wodurch die Kette abgebrochen resp. terminiert wird.

Bevorzugte mögliche aktive Seitenketten:
Geeignete aktive Seitenketten können sich zusammensetzen aus Zwischengliedern und terminierenden Elementen. 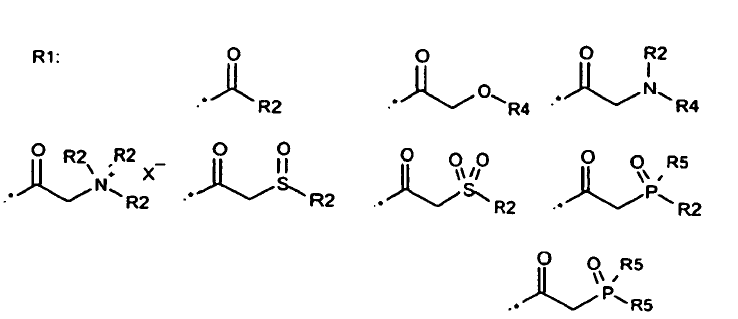 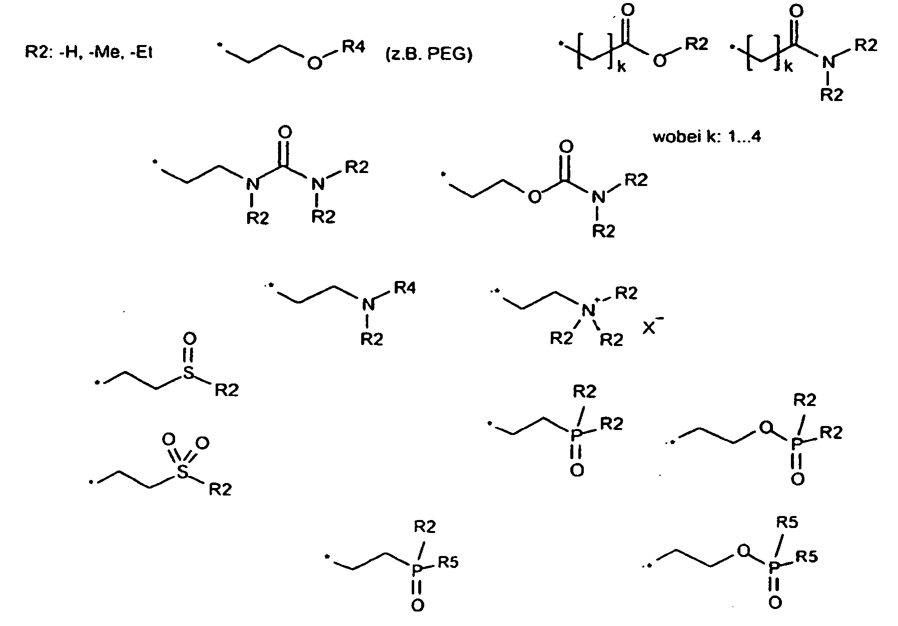 R3: -CH2O-R1 oder -CH2O-R2
   R4: R1, R2
   R5: -OR2 oder -N(R2)2
   R: R1, R2, R3, R4
Inbegriffen sind auch solche Substituenten, welche sich aus Bausteinen der Seitenketten-modifizierten Polymere zusammensetzen.

### Beispiele für Seitenketten-modifizierte Polymere

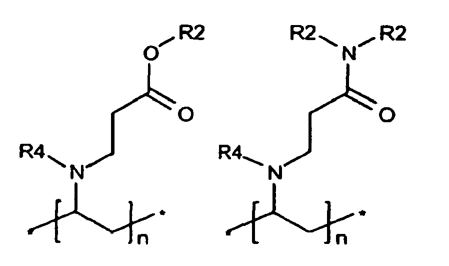

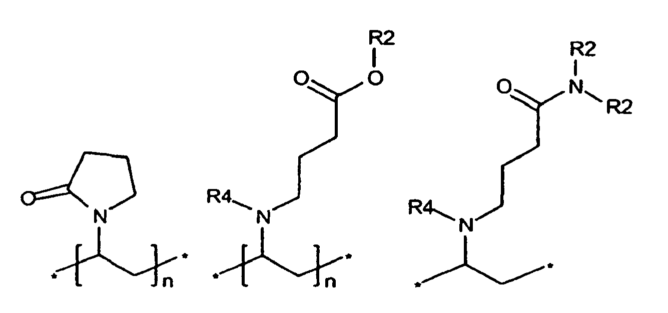

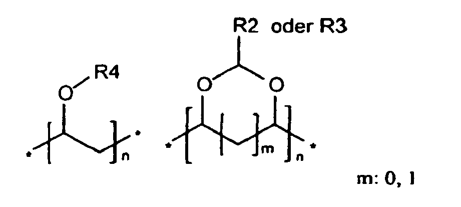

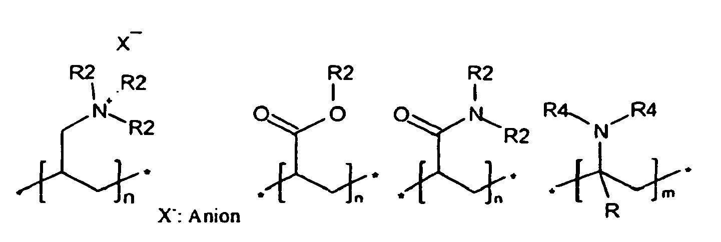

### Beispiele für Polyoxoalkylene/Polyalkylen-imine

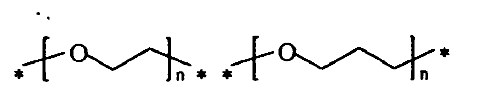

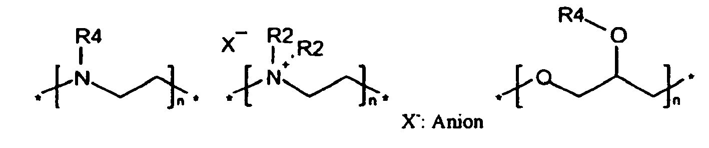

und speziell bevorzugtPoly(2-methyl-2-oxazolin) = PMOXA

### Beispiele für Polyamide (substituierte oder unsubstituierte)

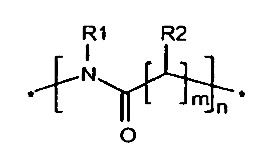

### Beispiele für gemischte Polymere: Etherester, Etherurethane, Etheramide

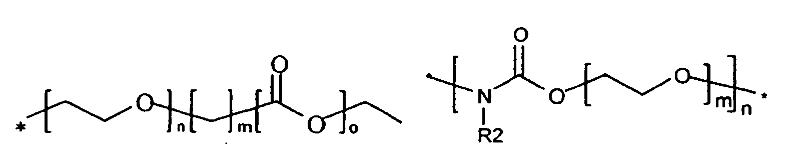

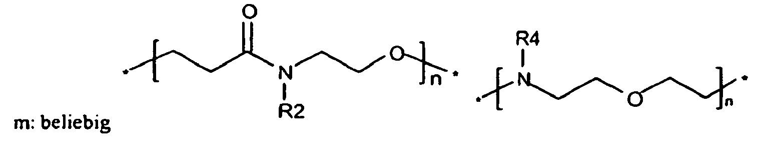

### Beispiele für Poly-Sulfoxide und Poly-Sulfone

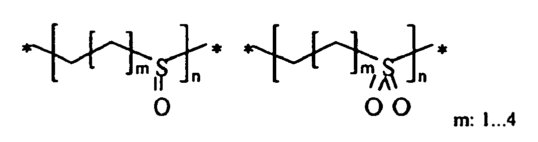

### Beispiele für phosphorhaltige Polymere

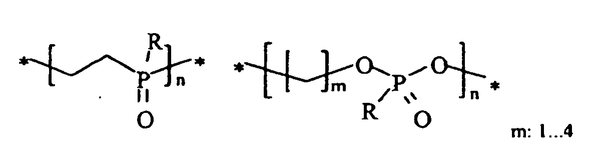

Die oberflächenmodifizierenden Polymere können rein, d.h. nur jeweils eine Sorte an Polymeren, oder in Mischung mit einer oder mehreren weiteren Sorten von Polymeren eingesetzt werden.

Gut geeignete oberflächenmodifizierende Polymere sind Polyethylenglycole, z.B. Polyethylenglycole mit einem mittleren Molekulargewicht von 100 g/Mol bis 10000 g/Mol, vorzugsweise 100 g/Mol bis 2000 g/Mol, stärker bevorzugt 300 g/Mol bis 1000 g/Mol, insbesondere 300 g/Mol bis 500 g/Mol.

Damit sich die oberflächenmodifizierenden Polymere in der äussersten, lösungsmittelnahen Schicht frei in die Flüssigkeit erstrecken, welche die Oberfläche umgibt, ist es bevorzugt, wenn ihre die Löslichkeit im Ziellösungsmittel fördernden Gruppen wenig oder vorzugsweise keine Affinität zur Substrat-Oberfläche haben. Dadurch kann verhindert werden, dass sie sich innerhalb und/oder entlang der Substrat-Oberfläche statt im wesentlichen quer dazu ausrichten.

Die für die Einbindung in die Polymermatrix bzw. die Kunststoffmatrix wesentlichen Ankerteile sind vorzugsweise Ankerpolymere oder Mischungen von Ankerpolymeren, vorausgesetzt, dass die Verträglichkeit gegeben ist. In speziellen Fällen können die Ankerteile auch der Vernetzung von Polymeren bzw. Oligomeren dienende Härtermoleküle sein.

Die Haftung zwischen dem Anker und der Polymermatrix ist primär physikalisch, kann aber bei geeigneter Matrix- und Ankerwahl mittels chemischer Reaktion durch kovalente Verankerung verstärkt werden.

Die Herstellung einer modifizierten Oberfläche, welche Ablagerungen verhindert oder vermindert, welche Kalk enthalten oder daraus bestehen, kann auf verschiedene Art erfolgen, bei thermoplastischen Polymeren bzw. Kunststoffen vorzugsweise dadurch, dass ein Matrixpolymer bzw. Matrixkunststoff, z.B. Polyethylen mit einem Block-Copolymer, z.B. PEG-b-PE, gemischt wird, welches die in Anspruch 1 beschriebenen Eigenschaften aufweist. Dies kann z.B. chargenweise (beispielsweise Typ Haake-Mischer) oder in einem kontinuierlichen Mischer (beispielsweise einem ein- oder zweiwelliger Co-Kneter) erfolgen. In letzterem Fall wird das entsprechende Granulat direkt im Spritzgussverfahren zu Formteilen oder durch Extrusion zu Profilen oder Rohren verarbeitet. Bei kautschukartigen Matrixpolymeren erfolgt die Zumischung des oberflächenmodifizierenden Block-Copolymers beispielsweise im Innenmischer.

Die maximale Menge an oberflächenmodifizierendem Block-Copolymer, die dem Matrixkunststoff zugesetzt werden kann, entspricht der Verträglichkeitsgrenze Block-Copolymer/Matrixpolymer. Die üblicherweise zugesetzte Menge kann sehr klein sein, und beispielsweise 0.1 % w/w betragen, und übersteigt selten ca. 5 % w/w. Für viele Fälle gute Resultate wurden ab ca. 0.5 % w/w erzielt. Zusatz von ca. 4 Gew.-% (nicht optimiert) eines kommerziell erhältlichen PEG-b-PE zu PE als Matrixpolymer ergab gute Resultate.

Neben der Additivzumischung zum Werkstoff bzw. zum ganzen Bauteil, liegt es auch im Rahmen der Erfindung, ein Bauteil mit einer Polymerschicht zu versehen, welche das Additiv aus Block-Copolymeren enthält. Eine solche Oberflächenbeschichtung, die von wenigen µm bis einigen mm-Schichtdicke aufweisen kann, kann beispielsweise aus einer Schmelze oder durch Solution Casting aufgebracht werden.

Die Entstehung der Ablagerung muss nicht notwendigerweise aus einer Flüssigkeit, wie einer homogenen Flüssigkeit, einer Emulsion oder Suspension, erfolgen. Die Entfernung des nicht erwünschten Stoffes (Kalk, Urinstein, Kesselstein,) erfolgt aber im Ziellösungsmittel, entweder kontinuierlich, so dass keine Ablagerung beobachtet wird, oder durch einfaches Abspülen.

Kalk enthaltende Ablagerungen umfassen Kalk, Urinstein, Kesselstein und Mischungen derselben.

Anwendungsgebiete, resp. Apparaturen, die vorteilhafterweise mit einer erfindungsgemäss haftungsvermindernden Schicht versehen werden, finden sich z.B. im Sanitärbereich bei Wasser- und Abwasserleitungen etc. daneben aber u.a. auch in Wärmetauschern, Kaffeemaschinen, Wasserzählern und in Wasserarmaturen allgemein, in Dosiervorrichtungen und in Filtern einschliesslich Membranfiltern.

### Kurze Beschreibung der Figuren

Weitere Ausgestaltungen, Vorteile und Anwendungen der Erfindung ergeben sich aus den abhängigen Ansprüchen. Die Figuren sollen die Erfindung weiter veranschaulichen:
Figur 1 zeigt schematisch, wie die oberflächenmodifizierenden Block-Copolymere mit Matrixpolymer bzw. Matrixkunststoff gemischt und zu einem Polymer bzw. Kunststoff mit modifizierter Oberfläche verbunden werden.
Figur 2 zeigt schematisch eine mögliche Prüfvorrichtung (Prüfstand), mit der die Kalkablagerung gemessen werden kann.

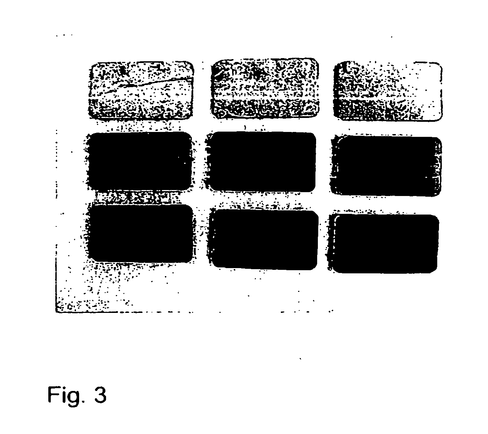

Figur 3 zeigt 6 PE Plättchen (mitte, unten) mit 4% Block-Copolymer-Zusatz (PEG-2) und 3 PE Plättchen (oben) ohne Zusatz (Referenz, schwarz eingefärbt) nach 3 Tagen im Kalkprüfstand. Die modifizierten Plättchen zeigen eine gute Anti-Kalkwirkung.

### Wege zur Ausführung der Erfindung

Die Erfindung wird in der Folge anhand von einigen konkreten Ausführungsbeispielen näher erläutert:

### Beispiele

Für die nachfolgend beschriebenen Untersuchungen wurden verschiedene kommerziell erhältliche Block-Copolymere verwendet, dem in Granulatform vorliegenden Matrixkunststoff auf einem Buss-Kneter zugemischt und die granulatförmige Mischung mittels Spritzguss zu Plättchenproben verarbeit, bevor sie im Kalkprüfstand untersucht wurden.

Es wurden fünf verschiedene PE-PEG-Block-Copolymere bzw. PE-b-PEG verwendet, wovon sich vier in der Kettenlänge, d.h. im Molekulargewicht unterschieden, sowie im Verhältnis beider Blöcke, d.h. im Verhältnis der apolaren E-Einheiten zu den hydrophilen EO-Einheiten, in der nachfolgenden Formel im Verhältnis x : y.

H-(CH₂-CH₂)ₓ-(O-CH₂-CH₂)_{y}-OH

Im ersten Fall war das Verhältnis Ethylen zu Ethylenoxid (x / y) ungefähr 25 / 16; im zweiten und dritten und vierten Fall waren x / y ungefähr 9 / 10, 8 / 10 und 6 / 4. PEG-2 und PEG-3 unterscheiden sich nur bezüglich einer C-C-Bindung (Doppelbindung in PEG-2). Details sind in Tabelle 1 aufgelistet:

**Tabelle 1:**

| Code | Mol-Gewicht | CAS-Nr. | Aldrich Nr. | Bezeichnung | Schmelz punkt [°C] | E/EO x/y | HLB-Wert¹ |
|---|---|---|---|---|---|---|---|
| PEG-1 | 1400 | 251553-55-6 | 458961 | PE-b-PEG | 115 | 25/1 6 | 10 |
| PEG-2 | 709 | 9004-98-2 | 431281 | Brij 97 | 25-30 | 9/10 | 12 |
| PEG-3 | 711 | 9005-00-9 | 388890 | Brij 76 | ca. 38 | 9/10 | 12 |
| PEG-4 | 683 | 9004-95-9 | 16003 | Brij 56 | 32-34 | 8/10 | 12.9 |
| PEG-5 | 362 | 9002-92-0 | 235989 | Brij 30 | flüssig | 6/4 | 9 |

| | | | | | | | |
|---|---|---|---|---|---|---|---|
| ¹ Hydrophile-Lipophile-Balance | | | | | | | |

Da es sich bei PEG-1, PEG-2, PEG-3, PEG-4 und PEG-5 um technische Copolymere handelt, weist die Länge der einzelnen Ketten eine Molekulargewichtsverteilung auf. So besteht z.B. PEG-2 aus Molekülen umfassend Oleylalkohol (PE-Teil) und eine PEG-Kette, die zwischen 4 EO Einheiten und 21 EO Einheiten lang ist.

Bei den folgenden Strukturformeln handelt es sich um das jeweilige Hauptprodukt. Dies gilt wahrscheinlich auch für PEG-4 und PEG-5.

Der HLB-Wert ist umso grösser, je mehr hydrophile EO- Einheiten im Verhältnis zu den apolaren E-Einheiten vorhanden sind. Alle drei untersuchten Block-Copolymere zählen zu den nichtionischen Tensiden; sie wirken im Wasser als Emulgatoren.

Die Strukturen der fünf im Rahmen der Beispiele verwendeten Block-Copolymere sind wie folgt:

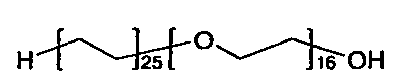

In der PE-Kette des PEG-2-Block-Copolymers befindet sich eine Doppelbindung. Es hat folgende chemische Struktur:

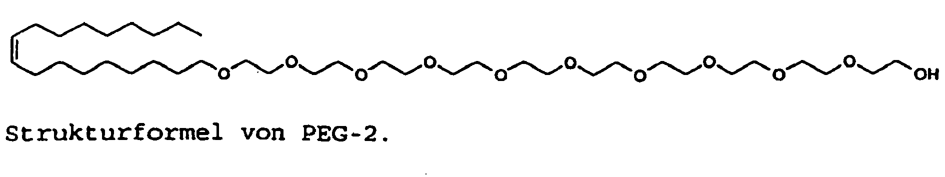

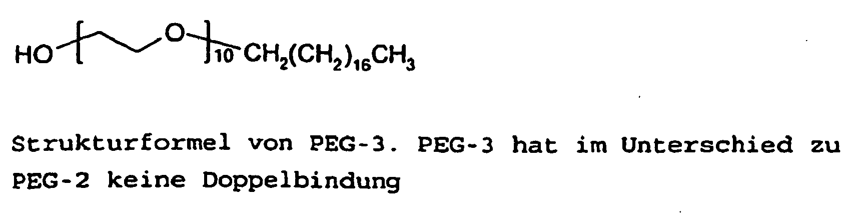

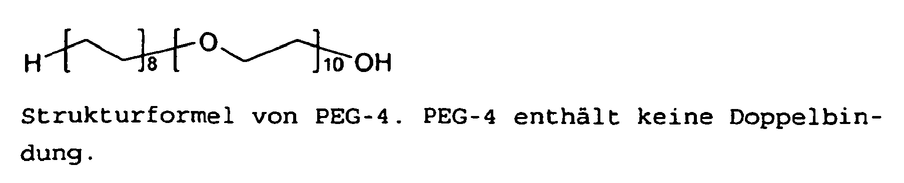

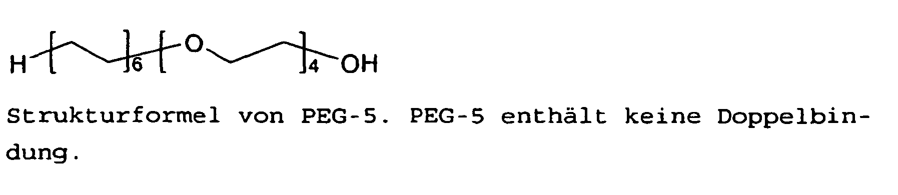

Solche Tenside sind beständig gegen Säuren und Basen und nicht toxisch. Sie finden breite Verwendung in Körperpflegeprodukten, in der Textilverarbeitung, in Pflanzenschutzmitteln, Farben, Klebern und anderen industriellen Anwendungen.

### Beispiel 1: Herstellung

Auf einem kontinuierlich arbeitenden Buss-Kneter wurden Mischungen mit 4 % w/w PEG-1- bzw. PEG-2- bzw. 3 % w/w PEG-3-Block-Copolymer und zwei PE-HD-Matrixkunststoff-Typen hergestellt (Hostalen von Basell und Borstar von Borealis, je mit Schmelzindex < 1.0 g/10 min, 190°C / 5.0 kg)

Bei 5 % w/w trat ein Schmiereffekt auf, d.h. bei dieser Konzentration war ein Teil der eingesetzten Additive nicht mehr verträglich.

Das getrocknete Granulat wurde jeweils anderntags durch Spritzguss zu Probekörpern (Plättchen 100 x 50 x 2 mm) verarbeitet.

Da PE auch - allerdings nur in kleinen Anteilen und je nach PP-Typ - mit Polypropylen verträglich ist, wurde auch eine Versuchsproduktion mit PP gemacht. Beim verwendeten PP-Matrixkunststoff handelte es sich um Daplen (PP-Coplymer von Borealis)

Es wurden insgesamt fünf Versuchproduktionen gemacht (siehe Tabelle 2):

**Tabelle 2:**

| PE-Typ | PP-Typ | PEG | | Bemerkungen |
|---|---|---|---|---|
| | | Typ | Konz.[%] | |
| Hostalen | | PEG-1 | 4 | |
| Borstar | | PEG-2 | 4 | "Charge 1" |
| | Daplen | PEG-2 | 4 | |
| Borstar | | PEG-2 | 4 | "Charge 2" |
| Borstar | | PEG-3 | 3 | |

Ferner wurden auf einem Haake Mini-Compounder Mischungen mit 4 % w/w PEG-4- bzw. PEG-5-Block-Copolymer und PE-Matrixkunststoff von Borstar hergestellt.

### Beispiel 2: Oberflächenanalytik

Mittels Röntgenphotoelektronenspektroskopie (XPS) konnte die Oberflächenkonzentration von Sauerstoff auf den Polyethylenplättchen gemessen werden. Da nur die PEG-Kette Sauerstoff enthält, ist dessen Konzentration ein Mass für die Anzahl der PEG-Ketten auf der Oberfläche. Bei der Mischung mit langem Copolymer PEG-1 wurden 0.7% Sauerstoff gefunden, und mit kurzem Copolymer PEG-2 wurden 3.3% Sauerstoff gefunden. Bei reinem Polyethylen, d.h. Matrixmaterial ohne erfindungsgemässes Additiv, wurde kein Sauerstoff auf der Oberfläche gefunden. Die Resultate vom Kalkprüfstand deckten sich mit den Resultaten der XPS-Messungen. Die IR-Spektren sind im Wesentlichen gleich.

### Beispiel 3: Verkalkungsprüfung

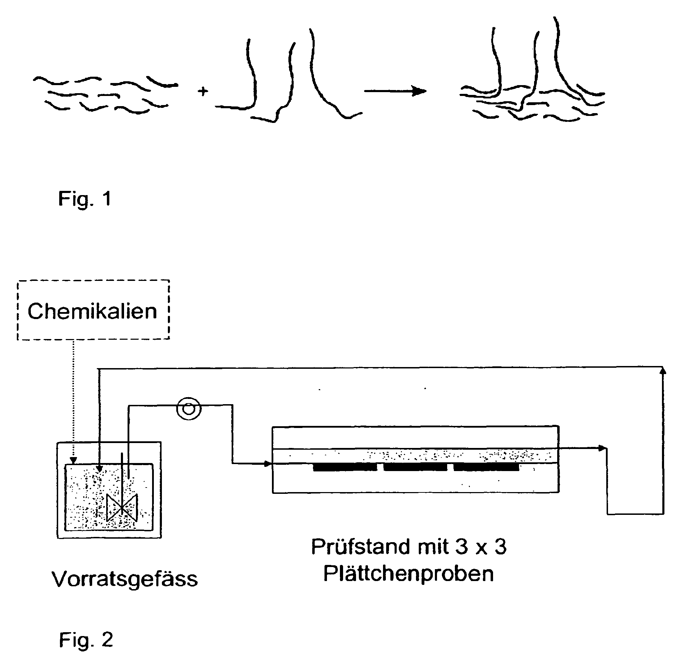

Die Untersuchung der Anti-Kalk Eigenschaften von mit den fünf beschriebenen PEG-Block-Copolymeren modifizierten Matrixkunststoffen wurden in einem Prüfstand gemäss Fig. 2 durchgeführt.

Der Verkalkungstest wurde unter Standardbedingungen bei 20°C, einem Volumenstrom von 0.35-0.37 l/min während einer Dauer von 17-18 Stunden mit einer aus Calciumchlorid und Natriumhydrogencarbonat frisch hergestellten Lösung mit einer Konzentration von 10 mmol/l Ca²⁺-Ionen und 20 mmol/l Hydrogencarbonat-Ionen durchgeführt. Als Referenzwerkstoff wurde in jedem Versuch ABS mitgeprüft, um den Einfluss unterschiedlicher Keimbildungsgeschwindigkeiten zu kompensieren. Die nichtmodifizierten Werkstoffe (siehe Tabelle 3: PE-HD, MABS, PVC-U und PP-C) verkalkten unter den Prüfbedingungen etwa gleich stark wie die Referenz ABS. Die mit PEG-b-PE modifizierten Werkstoffe zeigten jeweils siginifikant weniger Kalkablagerung als die Referenz. Mit PEG-1 wurde eine weniger ausgeprägte Anti-Kalkwirkung festgestellt. Dagegen wurde mit PEG-2 mit einer Konzentration von 4% starke Anti-Kalkwirkung gefunden.

Die Resultate sind in Tabelle 3 zusammengefasst:

**Tabelle 3:**

| Unmodifizierte und modifizierte Werkstoffe "M" und ABS (Referenz; nicht modifiziert) | n | Abgelagerte Mengen Kalk auf M und auf ABS | | M/ABS | Bemerkungen | |
|---|---|---|---|---|---|---|
| | | mg | r.St. | rel. | A | B |
| PE-HD | 3 | 10.4 ± 0.5 | 0.05 | 0.92 | X | |
| MABS | 3 | 10.8 ± 0.8 | 0.07 | 0.96 | X | |
| ABS | 3 | 11.3 ± 0.2 | 0.02 | 1.00 | x | |
| PVC-U | 2 | 12.6 | | 0.91 | X | |
| PP-C | 3 | 12.2 ± 0.8 | 0.07 | 0.88 | X | |
| ABS | 3 | 13.9 ± 0.7 | 0.05 | 1.00 | x | |
| PE-HD/PEG-1 | 6 | 1.3±0.3 | 0.23 | 0.43 | | x |
| ABS | 3 | 3.0±0.3 | 0.10 | | x | |
| PE-HD/PEG-2^{a)} | 6 | 0.7±0.2 | 0.29 | 0.15 | | x |
| ABS | 3 | 4.7+0.4 | 0.09 | | x | |
| PE-HD/PEG-2^{a)} | 3 | 1.3±0.6 | 0.46 | 0.33 | | x |
| ABS | 3 | 3.9±0.7 | 0.18 | | x | |
| PE-HD/PEG-2^{b)} | 6 | 0.2±<0.1 | 0.31 | 0.03 | | x |
| ABS | 3 | 5.2±0.12 | 0.02 | | x | |
| PE-HD/PEG-2^{b)} | 6 | 1.6±0.3 | 0.20 | 0.12 | | x |
| ABS | 3 | 13.4±0.5 | 0.03 | | x | |
| PE-HD/PEG-2^{b)} | 3 | 0.5±0.6 | 1.12 | 0.16 | | x |
| PE-HD (Hostalen) | 3 | 2.8±0.2 | 0.08 | 0.89 | x | |
| ABS | 3 | 3.1±0.25 | 0.08 | | x | |
| PE-HD/PEG-3 | 6 | 1.6±0.5 | 0.31 | 0.21 | | x |
| ABS | 3 | 7.5±1.0 | 0.14 | | x | |
| PP/PEG-2 (Daplen) | 6 | 8.1±0.7 | 0.09 | 0.58 | | x |
| ABS | 3 | 14.0±0.6 | 0.04 | | x | |
| PP/PEG-2 (V7.2) | 6 | 4.3±0.3 | 0.07 | 0.66 | | x |
| ABS | 3 | 6.5±0.2 | 0.04 | | x | |
| PP/PEG-2 (V6.2) | 6 | 4.6±0.4 | 0.09 | 0.30 | | x |
| ABS | 3 | 15.3±0.2 | 0.01 | | x | |
| PE / PEG-4 | | | | gut^{c)} | | x |
| PE / PEG-5 | | | | gut^{c)} | | x |

| | | | | | | |
|---|---|---|---|---|---|---|
| ^{a)} mit "Charge 1" durchgeführt ^{b)} mit "Charge 2" durchgeführt ^{c)} Die Proben wurden qualitativ bewertet. Das schwarze PE war nach der Verkalkung fast vollständig kalkfrei (Verkalkung < 5%). M = Bezeichnung für modifizierte und nicht modifizierte Werkstoffe, ohne Referenz ABS ABS = Acrylnitril-Butadien-Styrol (Terluran, von BASF) = Referenzwerkstoff, nicht modifiziert MABS = Methyl Methacrylat ABS (Terlux, von BASF) PVC-U = Hart-PVC (Evicom, von EVC) PP-C = Polypropylen-Copolymer (Daplen von Borelais) PE-HD = Polyethylen hoher Dichte (Borstar von Borealis und Hostalen von Basell) n = Anzahl untersuchter Proben (maximal 9 pro Versuch) r.St. = relative Standardabweichung A = unmodifiziert B = mit Additiv (erfindungsgemäss) | | | | | | |

Die erfindungsgemässe Verwendung aller mit PE-PEG-Block-Copolymer modifizierten Werkstoffe ergaben signifikant geringere Kalkablagerungen als die unmodifizierten Werkstoffe und gegenüber der Referenz ein Verhältnis von M/ABS von < 1 und damit eine statistisch relevante kalkabweisende Wirkung.

Die besten Werte wurden mit PEG-2 erzielt mit einer Reduktion der Kalkablagerungen auf unter ca. 5 %. Auch mit PEG-1 wurde eine signifikante Wirkung von < 0.5 bzw. < 50 % Ablagerung gefunden.

Die ABS-Referenzen zeigen im allgemeinen eine sehr kleine relative Streuung (< 10 %).

Bei den Mischungen von PE mit PEG-1 und PEG-2 weisen alle entsprechenden Proben eine Streuung > 10 % auf. Je geringer die abgelagerte Kalkmenge, umso grösser die relative Streuung.

Bei der Mischung von PE mit PEG-3 (mit nur 3 % Additiv-Zusatz)wurden die Kalkablagerungen auf ca. 21 % reduziert.

Bei den Mischungen von PP mit PEG-2 resultierte nur bei einer Variante ein Antikalkeffekt von < 50 %. Dafür wiesen alle drei PP-Varianten niedrige Streuungen (< 10%) auf, was auf eine gute Mischungsqualität und gute Verträglichkeit von PEG-2 hindeutet.

### Beispiel 4: Alterungsprüfungen

Da die PE-PEG-Block-Copolymere mit PEG-2 bisher mit PE die besten Antikalk-Eigenschaften lieferten, wurden damit Alterungsprüfungen durchgeführt.

Vorab wurden qualitative Kurzzeitprüfungen durchgeführt. Dabei wurde die Stabilität verschiedener mit PEG-2 modifizierter PE-Plättchen täglich während 21 Tagen bestimmt. Es wurden die folgenden Ergebnisse bezüglich der Antikalkwirkung erhalten:
- PE mit PEG-2 in Heisswasser bei 50°C: gut
- PE mit PEG-2 in Heisswasser bei 70°C: gut
- PE mit PEG-2 in Heisswasser bei pH 3, 70°C: gut
- PE mit PEG-2 in Chlorwasser bei RT: gut
- PE mit PEG-2 in Heisswasser bei pH 9,70°C: gut

Im Rahmen der anschliessenden quantitativen Langzeitprüfung wurden zwei Arten von Prüfungen durchgeführt:
1) Lagerung im Stahlautoklaven in Heisswasser, unter Luftdruck, über 2000 Stunden (zwecks Simulation des Migrations- bzw. Auswaschverhaltens, kombiniert mit Sauerstoffoxidation z.B. von luftgesättigtem Wasser in Leitungen). Dieser Versuch gründet auf Erfahrungen im Zusammenhang mit der Alterung von Trinkwasserleitungen.
2) Lagerung im Ofen und in Heissluft, trocken. Übliche thermische Alterung, ebenfalls über 1000 und 2000 Stunden.

Es wurden je zwei Verkalkungsprüfungen pro Alterungsversuch und pro Lagerungsdauer durchgeführt.

Die Ablagerungsversuche zur Ermittlung der Kalkablagerung nach Langzeitlagerung von PE-HD/PEG-2 wurden wie oben beschrieben durchgeführt. Die Resultate sind in der nachfolgenden Tabelle 4 zusammengefasst:

**Tabelle 4:**

| Expositionsbedingungen | M = PE/PEG-2 | | | ABS (Referenz) | | | M/ABS |
|---|---|---|---|---|---|---|---|
| | n | [mg] | r.St. | n | [mg] | r.St. | rel. |
| 2000h/70°C/Druck | 6 | 1.5+0.4 | 0.27 | 3 | 8.4±0.3 | 0.04 | 0.17 |
| 2000h/70°C/Druck | 5 | -0.1±0.3 | > 1 | 3 | 6.1±0.1 | 0.01 | ca. 0 |
| 1000h/70°C/Ofen | 6 | 1.2±0.3 | 0.27 | 3 | 6.0±1.2 | 0.19 | 0.19 |
| 1000h/70°C/Ofen | 6 | 1.3±0.4 | 0.33 | 3 | 13.7±0.8 | 0.06 | 0.09 |
| 2000h/70°C/Ofen | 6 | 2.9±0.7 | 0.22 | 3 | 5.6±0.4 | 0.08 | 0.52 |
| 2000h/70°C/Ofen | 6 | 1.7±0.5 | 0.3 | 3 | 7.3±0.6 | 0.08 | 0.23 |

| | | | | | | | |
|---|---|---|---|---|---|---|---|
| M = mit Additiv modifizierter Werkstoff ABS = Terluran (BASF) n = Anzahl untersuchter Proben pro Versuch r.St. = relative Streuung | | | | | | | |

Die Antikalkwirkung blieb nach den beiden Alterungen überraschend gut erhalten. Auch die Reproduzierbarkeit war befriedigend, es ergaben sich qualitativ übereinstimmende Ergebnisse:

Im Autoklaven wurde nach 2000 h gute bis sehr gute Antikalkwirkung gefunden.

Die Resultate nach Lagerung im Ofen waren den Erwartungen entsprechend, nämlich nach 1000 h noch gute bis genügende Antikalkwirkung, nach 2000 h deutlicher Verlust der Antikalkwirkung aber immer noch signifikant messbar.

Eine Zusammenfassung der Versuchsergebnisse ist der Tabelle 5 zu entnehmen:

**Tabelle 5:**

| PE-HD/PEG-2 | Charge 1 | Charge 2 |
|---|---|---|
| Referenz ungealtert, relativ zu ABS | 0.2 - 0.3 | ≤ 0.1 |

| Kurzzeitlagerung | | |
|---|---|---|
| Heisswasser 50°C/21 d | gut | |
| Heisswasser 70°C/21 d | gut | mittel |
| Heisswasser pH 3/70°C/21 d | gut | gut |
| Heisswasser pH 9/70°C/21 d | gut | gut |

| Langzeitalterung | | |
|---|---|---|
| Autoklav 70°C/2000 h | ≤ 0.2 | |
| Ofen 70°C/1000 h | ≤ 0.2 | |
| Ofen 70°C/2000 h | 0.2 - 0.5 | |

## Patentansprüche

1. Verwendung eines Kunststoffs umfassend ein Matrixpolymer und ein Additiv aus Block-Copolymeren mit einem oberflächenmodifizierenden Teil und einem Ankerteil zur Verhinderung oder zur Verminderung der Haftung von Ablagerungen, wobei der oberflächenmodifizierende Teil oberflächenmodifizierende Polymere aufweist, die maximal 4 Kohlenstoff- oder Siliziumatome pro Heteroatom aufweisen (Heteroatomanteil von ≤ 4), eine Quellbarkeit in einem hydrophilen Ziellösungsmittel, derart, dass die Volumenzunahme (bestimmt im Bulk) mindestens 20 % bezogen auf das Volumen im trockenen Zustand beträgt und/oder eine Löslichkeit im hydrophilen Ziellösungsmittel, die mindestens 10g/l beträgt und wobei die äusserste, bei Verwendung lösungsmittelnahe Schicht mindestens 1 nm und maximal 100 nm dick ist, wobei der Ankerteil mit dem Matrixpolymer verträglich ist und das oberflächenmodifizierende Polymer mit dem Matrixpolymer unverträglich ist und wobei die Ablagerung ausgewählt ist aus Ablagerungen, welche Kalk enthalten oder daraus bestehen.

2. Verwendung gemäss Anspruch 1, **dadurch gekennzeichnet, dass** die oberflächenmodifizierenden Polymere einen Heteroatomanteil von ≤ 2 aufweisen.

3. Verwendung gemäss Anspruch 1 oder 2, **dadurch gekennzeichnet, dass** die oberflächenmodifizierenden Polymere einen Heteroatomanteil von ≤ 1.5 aufweisen.

4. Verwendung gemäss irgend einem der vorangehenden Ansprüche, **dadurch gekennzeichnet, dass** die äusserste, bei Verwendung lösungsmittelnahe Schicht mindestens 10 nm und maximal 100 nm dick ist.

5. Verwendung gemäss irgend einem der vorangehenden Ansprüche, **dadurch gekennzeichnet, dass** maximal 40% der Heteroatome enthaltenden Gruppen deprotonierbar und/oder zur Wasserstoffbrückenbildung befähigt sind.

6. Verwendung gemäss irgend einem der vorangehenden Ansprüche, **dadurch gekennzeichnet, dass** die Anzahl sp²-hybridisierter C-Zentren in der äussersten, lösungsmittelnahen Schicht maximal 50 % ausmachen.

7. Verwendung gemäss irgend einem der vorangehenden Ansprüche, **dadurch gekennzeichnet, dass** die oberflächenmodifizierenden Teile Mischungen von oberflächenmodifizierenden Polymeren sind.

8. Verwendung gemäss irgend einem der vorangehenden Ansprüche, **dadurch gekennzeichnet, dass** die oberflächenmodifizierenden Polymere ausgewählt sind aus der Gruppe bestehend aus
- Seitenkettenmodifizierten Polymeren,
- Polyoxoalkylenen,
- Polyalkyleniminen,
- Polyamiden (substituierte und unsubstituierte),
- Polyetherestern,
- Polyetherurethanen,
- Polyetheramiden,
- Poly-Sulfoxiden,
- Poly-Sulfonen, und
- Phosphorhaltigen Polymeren.

9. Verwendung gemäss irgend einem der vorangehenden Ansprüche, **dadurch gekennzeichnet, dass** die oberflächenmodifizierenden Polymere Polyethylenglycol enthalten oder daraus bestehen.

10. Verwendung gemäss irgend einem der vorangehenden Ansprüche, **dadurch gekennzeichnet, dass** der Ankerteil, eine Kettenlänge von mindestens 5 Monomereinheiten bzw. mindestens 10 Atomen aufweist, vorzugsweise mindestens ca. 9 Monomereinheiten, bzw. mindestens ca. 20 Atome aufweist.

11. Verwendung gemäss irgend einem der vorangehenden Ansprüche, **dadurch gekennzeichnet, dass** der Kunststoff Bestandteil einer Vorrichtung aus dem Sanitärbereich ist, wie einer Wasserleitung, einer Abwasserleitung oder eines Spülsystems.

12. Verwendung gemäss irgend einem der Ansprüche 1 bis 11, **dadurch gekennzeichnet, dass** der Kunststoff Bestandteil eines Wärmetauschers, einer Kaffeemaschine, eines Wasserzählers, einer Dosiervorrichtung oder eines Filters (inkl. Membranfilters) ist.

13. Verwendung gemäss irgendeinem der vorangehenden Ansprüche, **dadurch gekennzeichnet, dass** die Ablagerung salzartig und/oder kristallisierend ist.

14. Verwendung gemäss irgendeinem der vorangehenden Ansprüche, **dadurch gekennzeichnet, dass** die Ablagerung ausgewählt ist aus der Gruppe umfassend Kalk, Urinstein, Kesselsteinund Mischungen derselben.

15. Verwendung gemäss irgendeinem der vorangehenden Ansprüche, **dadurch gekennzeichnet, dass** das Matrixpolymer ausgewählt ist aus Polyethylen, Polypropylen und Styrolcopolymeren.

16. Verwendung eines haftungsverminderten Kunststoffs, wie in einem der Ansprüche 1 bis 10 definiert, als Bestandteil einer Vorrichtung aus dem Sanitärbereich, eines Wärmetauschers, einer Kaffeemaschine, eines Wasserzählers, einer Dosiervorrichtung oder eines Filters (inkl. Membranfilters) ist.

17. Verwendung gemäss Anspruch 16, **dadurch gekennzeichnet, dass** die Vorrichtung aus dem Sanitärbereich eine Wasserleitung, eine Abwasserleitung oder ein Spülsystem ist.

18. Verfahren zur Herstellung einer modifizierten Oberfläche, die Ablagerungen verhindert oder vermindert, welche Kalk enthalten oder daraus bestehen, **dadurch gekennzeichnet, dass** ein thermoplastisches Matrixpolymer bzw. Matrixkunststoff mit einem Block-Copolymer gemischt und im Spritzgussverfahren zu Formteilen oder durch Extrusion zu Profilen oder Rohren verarbeitet wird, wobei das Block-Copolymer einen mit dem Matrixkunststoff verträglichen Ankerteil und einen mit dem Matrixkunststoff unverträglichen oberflächenmodifizierenden Teil aufweist, wobei der oberflächenmodifizierende Teil oberflächenmodifizierende Polymere aufweist, die maximal 4 Kohlenstoff- oder Siliziumatome pro Heteroatom aufweisen (Heteroatomanteil von ≤ 4), eine Quellbarkeit in einem hydrophilen Ziellösungsmittel, derart, dass die Volumenzunahme (bestimmt im Bulk) mindestens 20 % bezogen auf das Volumen im trockenen Zustand beträgt und/oder eine Löslichkeit im hydrophilen Ziellösungsmittel, die mindestens 10 g/l beträgt und wobei die äusserste, bei Verwendung lösungsmittelnahe Schicht mindestens 1 nm und maximal 100 nm dick ist.

19. Verfahren gemäss Anspruch 18, **dadurch gekennzeichnet, dass** die Formteile oder Profile oder Rohre Bestandteile von Vorrichtung aus dem Sanitärbereich, Wärmetauschern, Kaffeemaschinen, Wasserzählern Dosiervorrichtungen oder Filtern (inkl. Membranfilter) sind.

## Claims

1. Use of a plastic comprising a matrix polymer and an additive of block copolymers with a surface-modifying part and an anchor part for avoiding or for reducing the adherence of deposits, wherein the surface-modifying part has surface-modifying polymers which have a maximum of 4 carbon atoms or silicon atoms per heteroatom (portion of heteroatoms ≤ 4), a tendency to swell in a hydrophilic target solvent such that the volume increase (determined in the bulk) amounts to at least 20% with respect to the volume in a dry state, and/or a solubility in the hydrophilic target solvent, which amounts to at least 10g/l, and wherein the outermost layer that during usage is next to the solvent has a thickness of at least 1 nm and at most 100 nm, wherein the anchor part is compatible with the matrix polymer and the surface-modifying polymer is incompatible with the matrix polymer and wherein the deposit is chosen of deposits containing or consisting of lime.

2. Use according to claim 1, **characterized in that** the surface-modifying polymers have a portion of heteroatoms ≤ 2.

3. Use according to claim 1 or 2, **characterized in that** the surface-modifying polymers have a portion of heteroatoms ≤ 1.5.

4. Use according to one of the preceding claims, **characterized in that** the outermost layer that during usage is next to the solvent has a thickness of at least 10 nm and at most 100 nm.

5. Use according to one of the preceding claims, **characterized in that** a maximum of 40% of the groups containing heteroatoms can be deprotonized and/or are enabled to form hydrogen bridges.

6. Use according to one of the preceding claims, **characterized in that** the number of sp²-hybridized C-centers amount to a maximum of 50% in the outermost layer close to the solvent.

7. Use according to one of the preceding claims, **characterized in that** the surface-modifying parts are mixtures of surface-modifying polymers.

8. Use according to one of the preceding claims, **characterized in that** the surface-modifying polymers are chosen from the group consisting of
- side-chain-modified polymers,
- polyoxoalkylenes,
- polyalkylene imines,
- polyamides (substituted and unsubstituted),
- polyether esters,
- polyether urethanes,
- polyether amides,
- polysulfoxides,
- polysulfones,
- phosphorus-containing polymers.

9. Use according to one of the preceding claims, **characterized in that** the surface-modifying polymers contain or consist of polyethylene glycol.

10. Use according to one of the preceding claims, **characterized in that** the anchor part has a chain length of at least 5 monomer units or at least 10 atoms respectively, preferably at least around 9 monomer units or at least around 20 atoms respectively.

11. Use according to one of the preceding claims, **characterized in that** the plastic is a component of a sanitary facility device, like a water pipe, a waste water pipe or a rinsing system.

12. Use according to one of the claims 1 to 11, **characterized in that** the plastic is a component of a heat exchanger, a coffee machine, a water counter, a dosage device or a filter (incl. membrane filters).

13. Use according to one of the preceding claims, **characterized in that** the deposit is salt-like and/or crystallizing.

14. Use according to one of the preceding claims, **characterized in that** the deposit is chosen from the group comprising lime, urine scale, boiler scale and mixtures thereof.

15. Use according to one of the preceding claims, **characterized in that** the matrix polymer is chosen from polyethylene, polypropylene and styrol copolymers.

16. Use of a adherence-reducing plastic as defined in one of the claims 1 to 10 as a component of a sanitary facility device, a heat exchanger, a coffee machine, a water counter, a dosage device or a filter (incl. membrane filters).

17. Use according to claim 16, **characterized in that** the sanitary facility device is a water pipe, a waste water pipe or a rinsing system.

18. Method for manufacturing a modified surface which avoids or reduces deposits containing or consisting of lime, **characterized in that** a thermoplastic matrix polymer or a matrix plastic respectively, is mixed with a block copolymer and is processed to mouldings by an injection moulding process or to profiles or tubes by extrusion, wherein the block copolymer has an anchor part compatible with the matrix plastic and a surface-modifying part which is incompatible with the matrix plastic, wherein the surface-modifying part has surface-modifying polymers which have a maximum of 4 carbon atoms or silicon atoms per heteroatom (portion of heteroatoms ≤ 4), a tendency to swell in a hydrophilic target solvent in such a way that the volume increase (determined in the bulk) amounts to at least 20% with respect to the volume in a dry state and/or a solubility in the hydrophilic target solvent, which amounts to at least 10g/l, and wherein the outermost layer that during usage is next to the solvent, has a thickness of at least 1 nm and at most 100 nm.

19. Method according to claim 18, **characterized in that** the mouldings or profiles or tubes are components of sanitary facility devices, heat exchangers, coffee machines, water counters, dosage devices or filters (incl. membrane filters).

## Revendications

1. Utilisation d'une matière plastique comprenant un polymère de matrice et un additif de copolymères en bloque avec une partie modificatrice de surface et une partie d'ancrage, pour éviter ou pour réduire l'adhérence de dépôts, la partie modificatrice de surface ayant des polymères modificateurs de surface qui ont au maximum 4 atomes de carbone ou de silicium par hétéroatomes (fraction des hétéroatomes ≤ 4), une tendance de gonfler dans un solvant de cible hydrophile, de sorte que l'augmentation de volume (déterminée en grande quantité) s'élève à au moins 20% par rapport au volume dans un état sec et/ou une solubilité dans le solvant de cible hydrophile, qui s'élève à au moins 10g/l, et la couche extérieure, proche du solvant pendant l'utilisation, ayant une épaisseur d'au moins 1 nm et au maximum 100 nm, la partie d'ancrage étant compatible avec le polymère de matrice et le polymère modificateur de surface étant incompatible avec le polymère de matrice et le dépôt étant choisi de dépôts contenant ou consistant de chaux.

2. Utilisation selon la revendication 1, **caractérisée en ce que** les polymères modificateurs de surface ont une fraction d'hétéroatomes ≤ 2.

3. Utilisation selon la revendication 1 ou 2, **caractérisée en ce que** les polymères modificateurs de surface ont une fraction d'hétéroatomes ≤ 1.5.

4. Utilisation selon l'une des revendications précédentes, **caractérisée en ce que** la couche extérieure, proche du solvant pendant l'utilisation, a une épaisseur d'au moins 10 nm et au maximum 100 nm.

5. Utilisation selon l'une des revendications précédentes, **caractérisée en ce qu'**un maximum de 40% des groupes contenant d'hétéroatomes sont déprotonés et/ou sont qualifiés à former des ponts-hydrogène.

6. Utilisation selon l'une des revendications précédentes, **caractérisée en ce que** le numéro des centres C hybridés sp2 représente au maximum 50% dans la couche extérieure, proche du solvant.

7. Utilisation selon l'une des revendications précédentes, **caractérisée en ce que** les parties modificatrices de surface sont des mixtures des polymères modificateurs de surface.

8. Utilisation selon l'une des revendications précédentes, **caractérisée en ce que** les polymères modificateurs de surface sont choisis du groupe consistant de:
- polymères modifiés dans la chaîne latérale,
- polyoxoalkylènes,
- polyalkylènimines,
- polyamides (substitués et non substitués),
- polyétheresters,
- polyétheruréthanes,
- polyétheramides,
- polysulfoxydes,
- polysulfones,
- polymères contenant du phosphore.

9. Utilisation selon l'une des revendications précédentes, **caractérisée en ce que** les polymères modificateurs de surface contiennent ou consistent de polyethylèneglycol.

10. Utilisation selon l'une des revendications précédentes, **caractérisée en ce que** la partie d'ancrage a une longueur de chaîne d'au moins 5 unités monomères ou bien au moins 10 atomes, préférablement au moins environ 9 unités monomères ou bien au moins environ 20 atomes.

11. Utilisation selon l'une des revendications précédentes, **caractérisée en ce que** la matière plastique est un composant d'un dispositif du domaine sanitaire, comme une conduite d'eau, une conduite des eaux usées ou un système de rinçage.

12. Utilisation selon l'une des revendications 1 à 11, **caractérisée en ce que** la matière plastique est un composant d'un échangeur de chaleur, d'une cafetière, d'un compteur d'eau, d'un dispositif de dosage ou d'un filtre (incl. des filtres à membrane).

13. Utilisation selon l'une des revendications précédentes, **caractérisée en ce que** le dépôt est du type sel et/ou cristallisant.

14. Utilisation selon l'une des revendications précédentes, **caractérisée en ce que** le dépôt est choisi du groupe comprenant de la chaux, des cristaux d'urine, du tartre et leur mixtures.

15. Utilisation selon l'une des revendications précédentes, **caractérisée en ce que** le polymère de matrice est choisi de copolymères de polyethylène, polypropylène et styrol.

16. Utilisation d'une matière plastique réductrice d'adhérence comme définie dans une des revendications 1 à 10 comme un composant d'un dispositif du domaine sanitaire, d'un compteur d'eau, d'un dispositif de dosage ou d'un filtre (incl. des filtres à membrane).

17. Utilisation selon la revendication 16, **caractérisée en ce que** le dispositif du domaine sanitaire est une conduite d'eau, une conduite des eaux usées ou un système de rinçage.

18. Procédé pour la fabrication d'une surface modifiée qui évite ou réduit des dépôts contenant ou consistant de chaux, **caractérisé en ce qu'**un polymère de matrice thermoplastique ou bien une matière plastique de matrice est mélangée avec un copolymère en bloque et est usinée comme pièce moulée par un processus de moulage ou comme des profiles ou tuyaux par extrusion, le copolymère en bloque ayant une partie d'ancrage compatible avec la matière plastique de matrice et une partie modificatrice de surface qui est incompatible avec la matière de plastique de matrice, la partie modificatrice de surface ayant des polymères modificateurs de surface qui ont au maximum 4 atomes de carbone ou de silicium par hétéro-atome (fraction des hétéro-atomes ≤ 4), une tendance de gonfler dans un solvant de cible hydrophile de sorte que l'augmentation de volume (déterminée en grande quantité) s'élève à au moins 20% par rapport au volume dans un état sec et/ou une solubilité dans le solvant de cible hydrophile, qui s'élève à au moins 10g/l, et la couche extérieure, proche du solvant pendant l'utilisation, ayant une épaisseur d'au moins 1 nm et au maximum 100 nm.

19. Procédé selon la revendication 18, **caractérisé en ce que** les pièces moulées ou les profiles ou tuyaux sont des composants de dispositifs du domaine sanitaire, des compteurs d'eau, des dispositifs de dosage ou des filtres (incl. des filtres à membrane).
